# EUROPÄISCHE PATENTSCHRIFT

(11) **EP 1 735 372 B1**
(45) Veröffentlichungstag und Bekanntmachung des Hinweises auf die Patenterteilung: **18.01.2012**
(21) Anmeldenummer: 05732406.3
(22) Anmeldetag: 15.04.2005
(51) Int. Cl.: C08J 7/04, C09D 183/04, C04B 20/00, C04B 26/00, C04B 41/48, C04B 41/49

(54) **BESCHICHTUNGSMATERIAL**
COATING MATERIAL
MATERIAU DE REVETEMENT

(30) Priorität: 15.04.2004 DE 102004018338
(43) Veröffentlichungstag der Anmeldung: 27.12.2006
(73) Patentinhaber: STO AG, 79780 Stühlingen (DE)
(72) Erfinder: GROCHAL, Peter, 79761 Waldshut (DE)
(74) Vertreter: Maiwald Patentanwalts GmbH
(86) Internationale Anmeldenummer: PCT/EP2005/004033
(87) Internationale Veröffentlichungsnummer: WO 2005/100459

(56) Entgegenhaltungen:
- US-A- 6 063 849
- US-A1- 2002 172 773

## Beschreibung

Die Erfindung betrifft ein Beschichtungsmaterial mit einem Bindemittel und einem Teilchen mit einer Größe von weniger als 10 µm und/oder einem eine Oberflächenrauhigkeit von weniger als 10 µm oder weniger aufweisenden Füllstoff sowie die Verwendung eines derartigen Beschichtungsmaterials zur Beschichtung von Fassaden und anderen Bauwerksteilen.

Beschichtungsmaterialien der vorstehend angegebenen Art werden aus optischen oder bauphysikalischen Gründen zur Beschichtung von Fassaden und anderen Bauwerksflächen eingesetzt. Dabei hat es sich allerdings als problematisch erwiesen, daß die Reinigung von mit solchen Beschichtungsmaterialien beschichteten Flächen oft schwierig und kostspielig ist. Daher wird schon seit langem nach Möglichkeiten gesucht, die Oberflächen von mit derartigen Beschichtungsmaterialien beschichteten Flächen selbstreinigend auszuführen.

Im Zusammenhang mit dem Erhalt von selbstreinigenden Oberflächen sind schon lange Beschichtungsmaterialien auf Basis mineralischer Farben bekannt, die an der Oberfläche einem ständigen Abbau unterliegen. Durch diesen auch als "Kreidung" bezeichneten Prozeß erneuern sich die Oberflächen ständig und anhaftender Schmutz wird mit der sich zersetzenden Beschichtung abgelöst. Diese Oberflächen haben allerdings den Nachteil, daß der ungleichmäßige und in einigen Fällen vollständige Abbau exponierter Stellen zu fleckigen Oberflächen führt und daß die Kreidung nicht nur einen schnellen Abbau der Beschichtung und somit verkürzte Sanierungsintervalle verursacht, sondern bei Berührung der beschichteten Oberfläche eine Verschmutzung des berührenden Stoffes (z. B. Kleidung) mit den Abbauprodukten der Beschichtung erfolgt.

Neben den selbstreinigenden Beschichtungsstoffen auf Basis mineralischer Farben sind auch selbstreinigende Beschichtungsmaterialien in Form von Silikonharzfarben bekannt geworden. Silikonharzfarben bilden eine hydrophobe Oberfläche, die von Niederschlagswasser kaum benetzt wird. Schmutzpartikel werden vom abfließenden Wasser von der Oberfläche gewaschen. Bei derartigen Beschichtungsmaterialien hat es sich allerdings als problematisch erwiesen, daß die zum Erhalt der Selbstreinigungseigenschaften benötigte Hydrophobie erst nach einer mehrmonatigen Bewitterung voll ausgebildet ist, weil erst dann im Beschichtungsmaterial enthaltene wasserlösliche Bestandteile vom Regen vollständig ausgewaschen worden sind. Das führt aber dazu, daß innerhalb der ersten Monate nach Ausführung der Beschichtung eine verstärkte Verschmutzung auftreten kann. Eine solche Verschmutzungsneigung wird insbesondere nach langen Trockenperioden beobachtet, nach denen sich große Mengen von Schmutzpartikeln und Schadstoffen in der Atmosphäre befinden und vom Niederschlagswasser aufgenommen werden. Die Schmutzpartikel lagern sich auf benetzbaren Oberflächen ab und führen zu einer Beeinträchtigung des Aussehens der Fassaden und anderer verschmutzter Flächen, auf denen sie abgelagert sind.

In der WO 00/39049 ist die Herstellung selbstreinigender Flächen unter Verwendung von Beschichtungsmaterialien der eingangs beschriebenen Art beschrieben. Die in dieser Schrift beschriebenen Beschichtungsmaterialien enthalten Füllstoffe mit einer zumindest bimodalen Teilchengrößenverteilung, wobei einerseits Teilchen mit einer Teilchengröße von wenigstens 5 µm und andererseits Teilchen mit einer Teilchengröße von höchstens 3 µm eingesetzt werden. Mit derartigen Beschichtungsmaterialien wird erreicht, daß verschmutztes Regenwasser von der Oberfläche eines Gegenstands abläuft und auf der Oberfläche abgelegte Staubteilchen von den abrollenden Wassertropfen mitgenommen werden. Ferner ergibt sich bei Einsatz der in der genannten Schrift beschriebenen Beschichtungsstoffe durch das unter Verwendung der besonderen Füllstoffe erreichte Ablaufen des Regenwassers eine dauerhaft trockene Fassade. Dadurch können Feuchteschäden, insbesondere an Wetterseiten der Fassade, vermieden werden. Des weiteren wird durch die erreichte Trocknung der Fassaden Mikroorganismen eine wichtige Lebensgrundlage, nämlich das Wasser, entzogen, so daß unter Verwendung der bekannten Beschichtungsmaterialien erhaltene Fassadenoberflächen auf natürliche Weise, ohne Zugabe von Bioziden, vor Befall von Pilzen, Algen, Flechten usw. geschützt werden können. Ein mit den aus der WO 00/39049 bekannten Beschichtungsmaterialien vergleichbares Beschichtungsmaterial ist auch in der EP 0 772 514 B1 beschrieben. Bei dem in dieser Schrift angegebenen Beschichtungsmaterial wird eine selbstreinigende Oberfläche dadurch erhalten, daß eine Oberflächenstruktur mit Erhebungen in einem Abstand von 5 bis 200 µm unter Verwendung von hydrophoben Polymeren oder dauerhaft hydrophobierten Materialien erzeugt werden, wobei darauf geachtet wird, daß die Erhebungen nicht durch Wasser oder durch Wasser mit Detergenzien ablösbar sind. Durch diese Mikrostruktur der Oberflächen wird eine selbstreinigende Eigenschaft erhalten, welche auf eine sogenannte Superhydrophobie, hervorgerufen durch spezielle Mikrostrukturen, zurückzuführen ist. Diese Eigenschaft ist als "Lotus-Effekt" bekannt geworden. Nach der genannten Schrift kann die gewünschte Oberflächenstruktur durch Nachbehandlung der Oberfläche, wie z.B. durch Prägen, Ätzen, Fräsen oder auch durch Bestauben der Oberflächen erreicht werden, wobei in jedem Fall sichergestellt werden soll, daß die so erhaltenen Erhebungen nicht durch Wasser oder durch Wasser mit Detergenzien abgelöst werden. Die in den genannten Schriften beschriebene selbstreinigende Oberflächenstruktur läßt sich auf glatten Oberflächen auch durch die Verwendung spezieller Sprays erreichen.

In der WO 00/06633 sind Beschichtungsmaterialien für Kunststoffe auf Basis anorganischer Bindemittel und Füllstoffe beschrieben. Dabei können die in der bekannten Schrift angegebenen Beschichtungsmaterialien zusätzlich photokatalytisch wirksame Mittel zur Selbstreinigung durch Abbau organischer Verschmutzungen und Superhydrophilie enthalten. Die zur Herstellung der bekannten Materialien eingesetzten Bindemittel sind dabei stabil gegen den photokatalytischen Effekt der photokatalytisch wirksamen Mittel.

In der EP 0 916 411 A1 ist ein beschichtetes Produkt mit einer ersten Beschichtungslage und einer zweiten, ein photokatalytisch wirksames Mittel enthaltenden Beschichtungslage angegeben. Durch die in der genannten Schrift beschriebene Kombination zweier Schichten wird eine photokatalytisch selbstreinigende Oberfläche geschaffen, die selbst nicht durch die photokatalytische Wirkung abgebaut wird.

Bei Verwendung von aus der EP 0 772 514 B1 und der WO 00/39049 bekannten Beschichtungsmaterialien, wie z. B. den beschriebenen Sprays für glatte Flächen, hat sich allerdings gezeigt, daß die ursprünglich beobachteten herausragenden Selbstreinigungseigenschaften auch dann nicht dauerhaft erhalten werden können, wenn, wie in der EP 0 772 514 B1 herausgestellt, sorgfältig darauf geachtet wird, daß die Mikrostruktur nicht durch Wasser oder durch Wasser mit Detergenzien abgelöst werden kann. In der US 6,063,849 ist ein Mittel zur Schmutzvermeidung angegeben, welches Zinkoxid und ein Mittel enthält, mit dem Zinkoxid photoempfindlich gemacht werden kann.

In der US 2002/0172773 A1 sind das Ablaufen von Wasser begünstigende Mittel angegeben, welche auf Geschirr aufgebracht werden können.

Angesichts dieser Probleme im Stand der Technik liegt der Erfindung die Aufgabe zugrunde, Beschichtungsmaterialien der eingangs beschriebenen Art bereitzustellen, deren selbstreinigende Eigenschaften dauerhaft erhalten bleiben, wenn sie von Zeit zu Zeit Regen, bewegtem Wasser oder mechanischen Belastungen, wie etwa Wind, ausgesetzt sind.

Erfindungsgemäß wird diese Aufgabe durch die in Patentanspruch 1 angegebene Weiterbildung der bekannten Beschichtungsmaterialien gelöst.

Dabei wird die Zusammensetzung des Beschichtungsmaterials zur Vermeidung der bei den bekannten Beschichtungsmaterialien auf Basis mineralischer Farben auftretenden unerwünschten Kreidung so eingestellt, daß der photokatalytische Abbau des Bindemittels der Kreidungsstufe 1 gemäß DIN EN ISO 4628-6 entspricht oder geringer ist. Der dauerhafte Erhalt der gewünschten selbstreinigenden Eigenschaften wigel im Rahmen der Erfindung dadurch sichergestellt werden, daß bei Einsatz des erfindungsgemäßen Beschichtungsmaterials als Außenbeschichtung bei einer Freibewitterung gemäß EN ISO 2810 (Klima Da, Probenkörper vertikal und dem Äquator zugewandt ausgerichtet) pro Jahr durch den photokatalytischen Abbau des Bindemittels eine Verminderung der Schichtdicke des Beschichtungsmaterials um 0,1 µm oder mehr, vorzugsweise 1 µm oder mehr, erzeugt wird.

Diese Erfindung geht auf die Erkenntnis zurück, daß der bei den bekannten Beschichtungsmaterialien beobachtete Verlust der selbstreinigenden Eigenschaften im wesentlichen darauf zurückzuführen ist, daß es neben den in der EP 0 772 514 B1 angesprochenen Beeinträchtigungen der Oberflächenstruktur durch Ablösung von Oberflächenpartikeln bei Kontakt mit Wasser und/oder Detergenzien auch zu Veränderungen der Oberflächenstruktur durch mechanische Belastungen kommen kann. Durch diese beispielsweise durch mit der Luft mitgeführte Partikel hervorgerufenen Belastungen kann es zu einer Beschädigung der Mikrostruktur von Fassadenoberflächen kommen, welche den Verlust der selbstreinigenden Eigenschaften mit sich bringt.

Bei Verwendung erfindungsgemäßer Beschichtungsmaterialien erfolgt eine selbsttätige Regeneration solchermaßen beschädigter Oberflächen, in dem durch katalytischen Abbau von Bindemittelschichten zwischen den Füllstoffteilchen ständig neue Mikrostrukturen erzeugt werden. Aufgrund der Verwendung von Füllstoffteilchen mit einer Größe und/oder Oberflächenrauhigkeit im Bereich von weniger als 100 µm weisen diese neu erzeugten Oberflächenstrukturen ebenfalls die gewünschte Superhydrophobie auf, so daß Oberflächen gebildet werden können, welche dauerhaft selbstreinigende Eigenschaften behalten. Dabei wird von der Erkenntnis Gebrauch gemacht, daß die gemäß EP 0 772 514 B1 gerade zu vermeidende Ablösung von Oberflächenschichten im Hinblick auf den Erhalt der gewünschten Eigenschaften dann mit Vorteil eingesetzt werden kann, wenn das Beschichtungsmaterial Teilchen mit der gewünschten Oberflächenstruktur bzw. Teilchengröße aufweist.

Dabei führt der beim Einsatz erfindungsgemäßer Beschichtungsmaterialien auftretende katalytische Abbau von Bindemitteln auch nicht zu den beim Einsatz der eingangs beschriebenen mineralischen Farben auftretenden Problemen, weil die Geschwindigkeit des katalytischen Abbaus des Bindemittels durch Einsatz geeigneter, katalytisch wirksamer Mittel so gesteuert werden kann, daß es nicht zu einer eine sichtbare Verschmutzung hervorrufenden Anlagerung von Abbauprodukten kommt, weil diese Abbauprodukte in hinreichendem Umfang von Regenwasser abgespült werden und/oder im Verlauf des katalytischen Abbaus flüchtige Materialien erzeugt werden, welche sich erst gar nicht auf den selbstreinigenden Oberflächen ablagern. Die zum Erhalt der gewünschten Regeneration der Oberflächen benötigte Geschwindigkeit kann dabei entsprechend der gewählten Teilchengröße und/oder Oberflächenrauhigkeit so eingestellt werden, daß der katalytische Abbau des Bindemittels auch nicht zu einer Verkürzung von Sanierungsintervallen führt.

Insgesamt wird durch Verwendung erfindungsgemäßer Beschichtungsmaterialien trotz selbsttätiger Regeneration von Oberflächen eine ausreichende Witterungsbeständigkeit erreicht. Unter Witterungsbeständigkeit von Beschichtungsmaterialien, wie etwa Anstrichen, versteht man deren Eigenschaft, den von außen kommenden, beschichtungszerstörenden Einflüssen des Wetters, wie Licht, UV-Strahlung, Temperatur, Sauerstoff, Feuchtigkeit und/oder Wasser, standzuhalten. Bei herkömmlichen Beschichtungsmaterialien wird die Witterungsbeständigkeit dadurch erreicht, daß Beschichtungsbestandteilen, denen eine photokatalytische Wirkung zugeschrieben wird, wie etwa Titandioxid-Pigmente, einer Oberflächenbehandlung zur Reduzierung der photokatalytischen Aktivität unterzogen werden. Auf diese Weise werden bei herkömmlichen Beschichtungen hochstabilisierte Pigmente mit hervorragender Schutzwirkung für Beschichtungsmaterialien erreicht. Durch die noch verbleibende restliche photokatalytische Aktivität dieser bekannten Materialien wird die Schichtdicke so langsam reduziert, daß erst nach vielen Jahren der Außenbewitterung eine Reduzierung der Schichtdicke um wenige µm beobachtet wird.

Von diesen bekannten Materialien unterscheidet sich das erfindungsgemäße Beschichtungsmaterial dadurch, daß durch Zugabe eines photokatalytisch hochwirksamen Mittels ein gewollter Bindemittelabbau erreicht wird, wobei die Abbaugeschwindigkeit durch Wahl des Bindemittels und des photokatalytisch wirksamen Mittels so eingestellt wird, daß sie größer ist als die Abbaugeschwindigkeit herkömmlicher Materialien mit obertlächenbehandelten photokatalytisch wirksamen Mitteln, aber so gering bleibt, daß eine unerwünschte Kreidung vermieden wird.

Im Hinblick auf die gewünschte Einstellbarkeit der Abbaugeschwindigkeit und/oder der Eigenschaften der Abbauprodukte hat es sich als besonders günstig erwiesen, wenn das Bindemittel zumindest teilweise photokatalytisch abbaubar ist und das katalytisch wirksame Mittel mindestens ein photokatalytisch wirksames Metalloxid aufweist.

Ein photokatalytisch abbaubares Bindemittel kann eine wäßrige Polymerdispersion, eine in Wasser redispergierbare Polymerdispersion, ein hydrophobes Harz und/oder ein Harzvorprodukt aufweisen.

Das photokatalytisch wirksame Mittel kann in Form eines photokatalytisch wirksamen Metalloxids vorliegen. Unter Berücksichtigung der gewünschten Abbaueigenschaften kann das photokatalytisch wirksame Mittel ein Oxid von Titan, Zink, Eisen, Mangan, Molybdän und/oder Wolfram, vorzugsweise mit einem Anteil von mindestens 60 Gew.-%, besonders bevorzugst mindestens 80 Gew.-%, insbesondere mindestens 90 Gew.-%, bezogen auf die Gesamtmenge des katalytisch wirksamen Mittels, aufweisen. Eine weitere Einstellbarkeit der katalytischen Eigenschaften und der erzeugten Abbauprodukte ist erreichbar, wenn das katalytisch wirksame Mittel mindestens ein Additiv, insbesondere Ion, ausgewählt aus C, N, S und/oder der aus Pt, Rh, Mn, Cr, Ru, Ni, Pd, Fe, Co, Ir, Cu, Mo, Zr, Re, Ag und Au, in Form ihrer Oxide und/oder Halogenide bestehenden Gruppe, vorzugsweise mit einem Anteil von 40 Gew.-% oder weniger, besonders bevorzugt 20 Gew.-% oder weniger, insbesondere 10 Gew.-% oder weniger, und mehr als 1 Gew.-%, vorzugsweise mehr als 2,5 Gew.-%, insbesondere 5 Gew.-% oder mehr, bezogen auf das Gesamtgewicht des katalytisch wirksamen Mittels, aufweist. Dadurch läßt sich die katalytische Eigenschaft auch mit Wellenlängen z. B. im sichtbaren Bereich des solaren Spektrums anregen, wodurch die Funktion der Beschichtung auch auf z. B. der Sonne abgewandten Nordseiten eines Gebäudes gewährleistet ist. Zum Abbau organischer Materialien einsetzbare Photokatalysatoren sind in der DE 197 57 496 A1 beschrieben. Der Offenbarungsgehalt dieser Schrift wird hinsichtlich des Aufbaus und der Zusammensetzung von Photokatalysatoren hiermit durch ausdrückliche Inbezugnahme in diese Beschreibung aufgenommen.

Beim Einsatz photokatalytisch abbaubarer Bindemittel in Verbindung mit photokatalytisch wirksamen Metalloxiden hat es sich als besonders vorteilhaft erwiesen, daß eine sich selbst erneuernde Oberfläche mit Lotus-Effekt-Eigenschaften erhalten wird, wobei die Selbstreinigung durch einen zusätzlich stattfindenden, photokatalytischen Abbau organischer Verschmutzungen unterstützt wird.

Im Hinblick auf den Erhalt besonders guter Selbstreinigungseigenschaften hat es sich als vorteilhaft erwiesen, wenn das katalytisch wirksame Mittel Zinksulfid, Zinkoxid oder Titandioxid, vorzugsweise in teilkristalliner oder in Anatasform, aufweist.

Unter Verwendung erfindungsgemäßer Beschichtungsmaterialien werden besonders gute Selbstreinigungseigenschaften erreicht, wenn der Füllstoff Teilchen mit einer Größe und/oder Oberflächenrauhigkeit von 10 µm oder weniger, insbesondere 1 µm oder weniger, besonders bevorzugt Nanofüllstoffe in Form hochdisperser Kieselsäure aufweist, weil auf diese Weise eine herausragende Superhydrophobie erhalten wird. Das Beschichtungsmaterial enthält zweckmäßigerweise weniger als 60 Gew.-%, vorzugsweise weniger als 40 Gew.-%, besonders bevorzugt weniger als 30 Gew.-% Füllstoffe mit den gewünschten Teilchengrößen bzw. Oberflächenrauhigkeiten.

Im Hinblick auf den Erhalt der gewünschten selbstreinigenden Eigenschaften hat es sich ferner als zweckmäßig erwiesen, wenn das Beschichtungsmaterial mit einem Überschuß an Bindemittel formuliert wird. Demnach bestehen Schichtungen nach der Erfindung aus unterkritischen oder kritischen Formulierungen, die dadurch gekennzeichnet sind, daß der enthaltene Füllstoff mindestens teilweise aus einem Nanopartikel, wie z.B. hochdisperse Kieselsäure, besteht. Unter einer kritischen bzw. unterkritischen Formulierung versteht der Fachmann dabei eine Formulierung, bei der ggf. vorhandene Pigmente, Füllstoffe und ggf. Zwischenräume vollständig vom Bindemittel umgeben bzw. ausgefüllt sind. Die Beschichtungsmaterialoberfläche bzw. unter Verwendung entsprechender Beschichtungsmaterialien erhaltene Filmoberfläche wird im getrockneten und ausgehärteten Zustand von einer geschlossenen Schicht aus Bindemittel und Füllstoffen/Pigmenten gebildet. Eine derart gestaltete Oberfläche einer Beschichtung zeigt noch keine selbstreinigenden Eigenschaften. Durch die Zugabe von photokatalytisch wirksamen Metalloxiden, wie z.B. die in der DE 197 57 496 beschriebenen hochporösen Photokatalysatoren zur Verwertung von sichtbarem Licht bzw. in einfachster Form auch durch Zinksulfid, Zinkoxid oder Titandioxid, vorzugsweise in teilkristalliner oder Anatasform, wird durch den unter Einwirkung von Tages- bzw. UV-Licht katalytisch induzierten Abbau von organischen Bestandteilen der Bindemittelfilm, beginnend bei der äußeren Schicht der Außenoberfläche, abgebaut. Durch diesen Abbau an Bindemittel werden die vorzugsweise eingesetzten Nanofüllstoffe freigelegt und bilden eine Mikrooberflächenstruktur mit hydrophoben Eigenschaften. Vorteilsweise können auch Kombinationen zwischen Polymerdispersionen und Nanopartikein, wie z. B. hochdisperse Kieselgele, sog. Nanokomposits, verwendet werden. Bei Nanokomposits sind die Nanopartikel bereits an der Oberfläche der Polymerdispersionsteilchen angelagert. Durch den photokatalytischen Abbau nicht nur des Bindemittels, sondern auch etwaiger sich auf der Oberfläche befindender organischer Schmutzpartikel wird eine gegenüber dem Stand der Technik deutlich wirksamere und dauerhafte selbstreinigende Funktion erreicht. Dabei wird durch den ständig erfolgenden Abbau an Bindemittel die Oberfläche laufend erneuert und ein Nachlassen der selbstreinigenden Eigenschaften durch den Verlust der Mikrostruktur zuverlässig vermieden.

Der photokatalytisch induzierte Abbau ist gegenüber den bereits beschriebenen kreidenden Oberflächen jedoch stark reduziert, so daß die für kreidende Oberflächen geltenden Nachteile vermieden werden können.

Das erfindungsgemäße Beschichtungsmaterial kann anders als das in der WO 00/39049 vorgeschlagene Beschichtungsmaterial einen Füllstoff mit einer monomodalen Teilchengrößenverteilung mit einem mittleren Teilchendurchmesser von 10 µm oder weniger, insbesondere 1 µm oder weniger, besonders bevorzugt 0,1 µm oder weniger, aufweisen.

Gemäß der Erfindung weist das Beschichtungsmaterial 10 bis 30 Gew.-%, insbesondere etwa 20 Gew.-% eines photokatalytisch abbaubaren Bindemittels, 2 bis 30 Gew.-%, insbesondere 5 bis 15 Gew.-%, besonders bevorzugt etwa 10 Gew.-% eines Füllstoffs mit einer mittleren Teilchengröße und/oder Oberflächen rauleigkeit von 10 µm oder weniger voraugsweise von 1 µm oder weniger, insbesondere 0,1 µm oder weniger, wie etwa nanoskalierte Kieselsäure, 2 bis 15 Gew.-%, insbesondere 3 bis 8 Gew.-%, besonders bevorzugt etwa 5 Gew.-% eines photokatalytisch wirksamen Pigments, wie etwa ggf. mit C, N und/oder S dotiertes TiO₂ sowie optional 0,01 bis 0,1 Gew.-%, insbesondere 0,05 Gew.-% eines Pigmentverteilers, 0,1 bis 1 Gew.-%, insbesondere etwa 0,3 Gew.-% eines Verdickungsmittels, 5 bis 3 Gew.-%, insbesondere 10 bis 20 Gew.-% eines weiteren Füllstoffs, wie etwa eines feinen Quarz-Füllstoffs, 10 bis 20 Gew.-%, insbesondere etwa 15 Gew.-% eines Pigments, 2 bis 8 Gew.-%, insbesondere etwa 6 Gew.-% eines Hydrophobierungsmittels, bis zu 4 Gew.-% eines Lösemittels, bis zu 0,8 Gew.-% eines Konservierungsmittels und/oder bis zu 35 Gew.-% Wasser auf. Nachstehend ist eine bevorzugte Beispielrezeptur erfindungsgemäßer Beschichtungsmaterialien angegeben:

| | Gew.-% |
|---|---|
| Wasser | 26,6 |
| Pigmentverteiler | 0,05 |
| Verdicker | 0,3 |
| Bindemittel | 20 |
| Quarz-Füllstoff fein | 15 |
| nanoskalierte Kieselsäure | 10 |
| Pigment TiO₂ | 15 |
| photokatalytisches Pigment | 5 |
| Hydrophobierung | 6 |
| Lösemittel | 2 |
| Konservierung | 0,05 |
| | 100,00 |

Zusammenfassend ist festzustellen, daß der Nachteil aller Anwendungen von den Lotuseffekt ausnutzenden selbstreinigenden Oberflächen im Rahmen der Erfindung durch eine Kombination der den Lotuseffekt bewirkenden Nanotechnologie und der Photokatalyse überwunden wird. Durch den Lotuseffekt einer Oberfläche mit einer Mikro/Nanostruktur wird erreicht, daß die Kontaktfläche von Wasser äußerst gering wird und die Energiewechselwirkung zwischen Wasser und Oberfläche unter 1 % sinkt. Die Dauerhaftigkeit einer solchen Beschichtung wird erfindungsgemäß dadurch verbessert, daß dem zur Herstellung dieser Beschichtungsstruktur verwendeten Beschichtungsmaterial nanoskalierte Teilchen, wie etwa Nanogele auf Basis von Kieselsäure, zugegeben werden, die bei fortlaufender Abwitterung der Oberfläche immer wieder die wirksame Oberflächenstruktur erneuern. Dazu wird im Rahmen der Erfindung die Photokatalyse spezifisch eingesetzt. Es wird dabei von der Erkenntnis Gebrauch gemacht, daß bereits in der Schichtdicke einer Farbe von nur etwa 150 µm durch Beimischen von nanoskalierten Füllstoffen unzählige virtuelle nanoskalierte Oberflächenschichten vorhanden sind, so daß bei Abwitterung einer äußeren Oberflächenschicht automatisch die nächste Oberflächenschicht zur Wirkung kommt. Dabei wird erfindungsgemäß das die nanoskalierten Füllstoffe umgebende Bindemittel abgebaut, wodurch (neue) Nanostrukturen an der Oberfläche hervorgebracht werden.

## Patentansprüche

1. Beschichtungsmaterial mit
10 bis 30 Gew.-% Bindemittel; und
2 bis 30 Gew.-% mindestens eines Füllstoffs, welcher Teilchen mit einer Größe und/oder Oberflächenrauhigkeit von 10 µm oder weniger, vorzugsweise 1 µm oder weniger, insbesondere 0,1 µm oder weniger aufweist; sowie
2 bis 15 Gew.-% eines photokatalytisch wirksamen Pigments,
**dadurch gekennzeichnet, dass** das Bindemittel zumindest teilweise durch die photokatalytische Wirkung derart abgebaut wird, dass der photokatalytische Abbau der Kreidungsstufe 1 gemäß DIN EN ISO 4628-6 entspricht oder geringer ist, und so eine mikrostrukturierte, selbstreinigende Oberfläche dadurch entsteht, dass bei einer Freibewitterung gemäß EN ISO 2810 (Klima Da, Probenkörper vertikal und dem Äquator zugewandt ausgerichtet) die Schichtdicke einer aus dem Beschichtungsmaterial gebildeten Außenbeschichtung pro Jahr photokatalytisch um 0,1 µm oder mehr, vorzugsweise 1 µm oder mehr, reduziert wird.

2. Beschichtungsmaterial nach Anspruch 1, **dadurch gekennzeichnet, dass** das Bindemittel zumindest teilweise photokatalytisch abbaubar ist und das katalytisch wirksame Mittel mindestens ein photokatalytisch wirksames Metalloxid aufweist.

3. Beschichtungsmaterial nach Anspruch 1 oder 2, **dadurch gekennzeichnet, dass** das Bindemittel eine wässrige Polymerdispersion, eine in Wasser redispergierbare Polymerdispersion, ein hydrophobes Harz und/oder ein Harzvorprodukt oder sog. Nanokomposits aufweist.

4. Beschichtungsmaterial nach einem der vorhergehenden Ansprüche, **dadurch gekennzeichnet, dass** das Bindemittel Silikon oder Silikat enthält.

5. Beschichtungsmaterial nach einem der vorhergehenden Ansprüche, **dadurch gekennzeichnet, dass** das katalytisch wirksame Mittel ein Oxid von Titan, Zink, Eisen, Mangan, Molybdän und/oder Wolfram, in einem Anteil von 60 Gew.-% oder mehr, vorzugsweise 80 Gew.% oder mehr, insbesondere 90 Gew.% oder mehr, bezogen auf das Gesamtgewicht des katalytisch wirksamen Mittels, aufweist.

6. Beschichtungsmaterial nach einem der vorhergehenden Ansprüche, **dadurch gekennzeichnet, dass** das katalytisch wirksame Mittel mindestens ein Additiv, insbesondere Ion, ausgewählt aus C, N, S und/oder der aus Pt, Rh, Mn, Cr, Ru, Ni, Pd, Fe, Co, Ir, Cu, Mo, Zr, Re, Ag und Au in Form ihrer Oxide und/oder Halogenide bestehenden Gruppe, vorzugsweise mit einem Anteil von 40 Gew.% oder weniger, besonders bevorzugt 20 Gew.-% oder weniger, insbesondere 10 Gew.-% oder weniger und mehr als 1 Gew.%, vorzugsweise mehr als 2,5 Gew.%, insbesondere 5 Gew.% oder mehr, bezogen auf das Gesamtgewicht des katalytisch wirksamen Mittels, aufweist.

7. Beschichtungsmaterial nach einem der vorhergehenden Ansprüche, **dadurch gekennzeichnet, dass** das photokatalytisch wirksame Mittel aus Titandioxid, insbesondere aus mit C, N und/oder S dotiertem TiO₂, in amorpher, teilkristalliner oder Anatasform besteht.

8. Beschichtungsmaterial nach einem der vorhergehenden Ansprüche, **dadurch gekennzeichnet, dass** der Füllstoff Teilchen mit einer Größe und/oder Oberflächenrauhigkeit von 10 µm oder weniger, insbesondere 1 µm oder weniger, besonders bevorzugt Nanofüllstoffe in Form hochdisperser Kieselsäure, aufweist.

9. Beschichtungsmaterial nach einem der vorhergehenden Ansprüche, **dadurch gekennzeichnet, dass** es sich bei den Nanofüllstoffen in Form hochdisperser Kieselsäure um Kieselgele handelt, die vorzugsweise durch Fällung im Sol-Gel-Prozess hergestellt werden.

10. Beschichtungsmaterial nach einem der vorhergehenden Ansprüche, **dadurch gekennzeichnet, dass** mindestens ein Füllstoff eine monomodale Teilchengrößenverteilung mit einem mittleren Teilchendurchmesser von 10 µm oder weniger, insbesondere 1 µm oder weniger, besonders bevorzugt 0,1 µm oder weniger, aufweist.

11. Beschichtungsmaterial nach einem der vorhergehenden Ansprüche, **dadurch gekennzeichnet, dass** das Beschichtungsmaterial mit einem Überschuss an Bindemittel formuliert ist.

12. Beschichtungsmaterial nach einem der vorhergehenden Ansprüche, **dadurch gekennzeichnet, dass** es Pigmente und/oder handelsübliche Additive, insbesondere Erstarrungsbeschleuniger und/oder -verzögerer, aufweist.

13. Beschichtungsmaterial nach einem der vorhergehenden Ansprüche mit etwa 20 Gew.% eines photokatalytisch abbaubaren Bindemittels, und/oder 5 bis 15 Gew.-%, besonders bevorzugt etwa 10 Gew.-% eines Füllstoffs mit einer mittleren Teilchengröße von 1 µm oder weniger, insbesondere 0,1 µm oder weniger, wie etwa nanoskalierter Kieselsäure, und/oder 3 bis 8 Gew.-%, besonders bevorzugt etwa 5 Gew.-% eines photokatalytisch wirksamen Pigments, wie etwa ggf. mit C, N und/oder S dotiertes TiO₂, sowie optional 0,01 bis 0,1 Gew.-%, insbesondere 0,05 Gew.-% eines Pigmentverteilers, 0,1 bis 1 Gew.-%, insbesondere etwa 0,3 Gew.-% eines Verdickungsmittels, 5 bis 30 Gew.-%, insbesondere 10 bis 20 Gew.-% eines weiteren Füllstoffs, wie etwa eines feinen Quarz-Füllstoffs, 10 bis 20 Gew.-%, insbesondere etwa 15 Gew.-% eines Pigments, 2 bis 8 Gew.-%, insbesondere etwa 6 Gew.-% eines Hydrophobierungsmittels, bis zu 4 Gew.-% eines Lösemittels, bis zu 0,8 Gew.-% eines Konservierungsmittels und/oder bis zu 35 Gew.-% Wasser.

14. Verwendung eines Beschichtungsmaterials nach einem der vorhergehenden Ansprüche zur Beschichtung von Fassaden, insbesondere Außenfassaden, und/oder anderen Bauwerksteilen.

## Claims

1. A coating material containing
10 to 30 % by weight of a binding agent; and
2 to 30 % by weight of at least one filler which comprises particles having a size and/or surface roughness of 10 µm or less, preferably 1 µm or less, in particular 0.1 µm or less; and
2 to 15 % by weight of a photocatalytically active pigment,
**characterised in that** the binding agent is degraded, at least in part, by the photocatalytic effect, **in that** the photocatalytic degradation corresponds to, or is less than degree of chalking 1 according to DIN EN ISO 4628-6, and a microstructured, self-cleaning surface is thus produced since the layer thickness of an outer coating formed from the coating material is reduced photocatalytically by 0.1 µm or more, preferably 1 µm or more per year with natural weathering according to EN ISO 2810 (climate Da, test specimen oriented vertically and facing the equator).

2. The coating material according to claim 1, **characterised in that** the binding agent is photocatalytically degradable, at least in part, and the catalytically active agent comprises at least one photocatalytically active metal oxide.

3. The coating material according to either claim 1 or claim 2, **characterised in that** the binding agent contains an aqueous polymer dispersion, a polymer dispersion which can be re-dispersed in water, a hydrophobic resin and/or a resin precursor or a 'nanocomposite'.

4. The coating material according to any one of the preceding claims, **characterised in that** the binding agent contains silicone or silicate.

5. The coating material according to any one of the preceding claims, **characterised in that** the catalytically active agent contains an oxide of titanium, zinc, iron, manganese, molybdenum and/or tungsten in an amount of 60 % by weight or more, preferably 80 % by weight or more, in particular 90 % by weight or more based on the total weight of the catalytically active agent.

6. The coating material according to any one of the preceding claims, **characterised in that** the catalytically active agent contains at least one additive, in particular ion, selected from C, N, S and/or the group consisting of Pt, Rh, Mn, Cr, Ru, Ni, Pd, Fe, Co, Ir, Cu, Mo, Zr, Re, Ag and Au in the form of their oxides and/or halogenides, preferably in an amount of 40 % by weight or less, more preferably 20 % by weight or less, in particular 10 % by weight or less and more than 1 % by weight, preferably more than 2.5 % by weight, in particular 5 % by weight or more based on the total weight of the catalytically active agent.

7. The coating material according to any one of the preceding claims, **characterised in that** the photocatalytically active agent consists of titanium dioxide, in particular of TiO₂ doped with C, N and/or S in amorphous, semi-crystalline or anatase form.

8. The coating material according to any one of the preceding claims, **characterised in that** the filler comprises particles having a size and/or surface roughness of 10 µm or less, in particular 1 µm or less, more preferably nanofillers in the form of highly dispersed silicic acid.

9. The coating material according to any one of the preceding claims, **characterised in that** the nanofillers in the form of highly dispersed silicic acid are silica gels which are preferably produced by precipitation in the sol-gel process.

10. The coating material according to any one of the preceding claims, **characterised in that** at least one filler has a monomodal particle size distribution with a mean particle diameter of 10 µm or less, in particular 1 µm or less, more preferably 0.1 µm or less.

11. The coating material according to any one of the preceding claims, **characterised in that** the coating material is formulated with an excess of binding agent.

12. The coating material according to any one of the preceding claims, **characterised in that** it contains pigments and/or commercially available additives, in particular solidification accelerators and/or inhibitors.

13. The coating material according to any one of the preceding claims, containing approximately 20 % by weight of a photocatalytically degradable binding agent, and/or 5 to 15 % by weight, more preferably approximately 10 % by weight of a filler having a mean particle size of 1 µm or less, in particular 0.1 µm or less, such as nanoscaled silicic acid, and/or 3 to 8 % by weight, more preferably approximately 5 % by weight of a photocatalytically active pigment, such as TiO₂ optionally doped with C, N and/or S, and optionally 0.01 to 0.1 % by weight, in particular 0.05 % by weight of a pigment distributor, 0.1 to 1% by weight, in particular approximately 0.3 % by weight of a thickening agent, 5 to 30 % by weight, in particular 10 to 20 % by weight of a further filler, such as a fine quartz filler, 10 to 20 % by weight, in particular approximately 15 % by weight of a pigment, 2 to 8 % by weight, in particular approximately 6 % by weight of a hydrophobing agent, up to 4 % by weight of a solvent, up to 0.8 % by weight of a preservative and/or up to 35 % by weight of water.

14. A use of a coating material according to any one of the preceding claims to coat façades, in particular external façades and/or other structural parts.

## Revendications

1. Matériau de revêtement avec
10 à 30 % en poids de liant ; et
2 à 30 % en poids d'au moins une charge comportant des particules dont la taille et/ou la rugosité de surface est inférieure ou égale à 10 µm, de préférence inférieure ou égale à 1 µm, notamment inférieure ou égale à 0,1 µm ; ainsi que
2 à 15 % en poids d'un pigment à action photocatalytique,
**caractérisé en ce que** ladite action photocatalytique provoque une dégradation au moins partielle dudit liant, de façon à ce que la dégradation par photocatalyse corresponde au degré de farinage 1 selon DIN EN ISO 4628-6 ou qu'elle y soit inférieure, et l'on obtient ainsi une surface autonettoyante microstructurée dont les propriétés tiennent au fait que, lors d'une exposition aux facteurs météorologiques selon EN ISO 2810 (climat de type Da, éprouvette en position verticale et orientée vers l'équateur), l'épaisseur de couche d'un revêtement extérieur formé à partir dudit matériau de revêtement subit une réduction annuelle par photocatalyse qui est supérieure ou égale à 0,1 µm, de préférence supérieure ou égale à 1 µm.

2. Matériau de revêtement selon la revendication 1, **caractérisé en ce que** ledit liant est au moins partiellement dégradable par photocatalyse et l'agent à action catalytique comporte au moins un oxyde métallique à action photocatalytique.

3. Matériau de revêtement selon la revendication 1 ou 2, **caractérisé en ce que** ledit liant comporte une dispersion de polymères aqueuse, une dispersion de polymères susceptible d'être redispersée dans l'eau, une résine hydrophobe et/ou un précurseur de résine ou des nanocomposites.

4. Matériau de revêtement selon l'une des revendications précédentes, **caractérisé en ce que** ledit liant contient du silicone ou du silicate.

5. Matériau de revêtement selon l'une des revendications précédentes, **caractérisé en ce que** ledit agent à action catalytique comporte un oxyde de titane, de zinc, de fer, de manganèse, de molybdène et/ou de tungstène, dans une proportion d'au moins 60 % en poids, de préférence d'au moins 80 % en poids, notamment d'au moins 90 % en poids, par rapport au poids total dudit agent à action catalytique.

6. Matériau de revêtement selon l'une des revendications précédentes, **caractérisé en ce que** ledit agent à action catalytique comporte au moins un additif, notamment un ion, choisi parmi C, N, S et/ou dans le groupe constitué de Pt, Rh, Mn, Cr, Ru, Ni, Pd, Fe, Co, Ir, Cu, Mo, Zr, Re, Ag et Au sous forme de leurs oxydes et/ou halogénures,
de préférence dans une proportion inférieure ou égale à 40 % en poids, avec une préférence particulière inférieure ou égale à 20 % en poids, notamment inférieure ou égale à 10 % en poids et supérieure à 1 % en poids, de préférence supérieure à 2,5 % en poids, notamment supérieure ou égale à 5 % en poids, par rapport au poids total dudit agent à action catalytique.

7. Matériau de revêtement selon l'une des revendications précédentes, **caractérisé en ce que** ledit agent à action photocatalytique est constitué de dioxyde de titane, notamment de TiO₂ dopé au C, N et/ou S, se présentant sous une forme amorphe, partiellement cristalline ou d'anatase.

8. Matériau de revêtement selon l'une des revendications précédentes, **caractérisé en ce que** ladite charge comporte des particules dont la taille et/ou la rugosité de surface est inférieure ou égale à 10 µm, notamment inférieure ou égale à 1 µm, avec une préférence particulière des nanocharges sous forme d'acide silicique hautement dispersé.

9. Matériau de revêtement selon l'une des revendications précédentes, **caractérisé en ce que** lesdites nanocharges sous forme d'acide silicique hautement dispersé sont des gels de silice, préparés préférentiellement par précipitation mettant en oeuvre le procédé sol-gel.

10. Matériau de revêtement selon l'une des revendications précédentes, **caractérisé en ce qu'**au moins une charge présente une répartition monomodale des tailles de particules, avec un diamètre moyen des particules inférieur ou égal à 10 µm, notamment inférieur ou égal à 1 µm, avec une préférence particulière inférieur ou égal à 0,1 µm.

11. Matériau de revêtement selon l'une des revendications précédentes, **caractérisé en ce que** ledit matériau de revêtement est formulé de façon à ce que ledit liant soit excédentaire.

12. Matériau de revêtement selon l'une des revendications précédentes, **caractérisé en ce qu'**il comporte des pigments et/ou des additifs disponibles dans le commerce, notamment des accélérateurs et/ou retardateurs de solidification.

13. Matériau de revêtement selon l'une des revendications précédentes avec environ 20 % en poids d'un liant dégradable par photocatalyse, et/ou 5 à 15 % en poids, avec une préférence particulière environ 10 % en poids, d'une charge dont la taille moyenne des particules est inférieure ou égale à 1 µm, notamment inférieure ou égale à 0,1 µm, telle que l'acide silicique à l'échelle nano, et/ou 3 à 8 % en poids, avec une préférence particulière environ 5 % en poids, d'un pigment à action photocatalytique tel que le TiO₂, le cas échéant dopé au C, N et/ou S, ainsi qu'optionnellement 0,01 à 0,1% en poids, notamment 0,05 % en poids, d'un agent de dispersion de pigments, 0,1 à 1 % en poids, notamment environ 0,3 % en poids, d'un épaississant, 5 à 30 % en poids, notamment 10 à 20 % en poids, d'une autre charge telle qu'une charge quartzique fine, 10 à 20 % en poids, notamment environ 15 % en poids, d'un pigment, 2 à 8 % en poids, notamment environ 6 % d'un agent d'hydrophobation, jusqu'à 4 % en poids d'un solvant, jusqu'à 0,8 % en poids d'un conservateur et/ou jusqu'à 35 % en poids d'eau.

14. Utilisation d'un matériau de revêtement selon l'une des revendications précédentes pour revêtir des façades, notamment des façades extérieures, et/ou d'autres parties d'un bâtiment.
